# EUROPÄISCHE PATENTSCHRIFT

(11) **EP 2 187 750 B1**
(45) Veröffentlichungstag und Bekanntmachung des Hinweises auf die Patenterteilung: **13.04.2011**
(21) Anmeldenummer: 08802765.1
(22) Anmeldetag: 02.10.2008
(51) Int. Cl.: A22C 11/00, B65B 69/00

(54) **VERFAHREN UND VORRICHTUNG ZUM PELLEN VON WÜRSTEN**
METHOD AND DEVICE FOR SKINNING SAUSAGES
PROCÉDÉ ET DISPOSITIF POUR PELER DES SAUCISSES

(30) Priorität: 02.10.2007 DE 102007047114
(43) Veröffentlichungstag der Anmeldung: 26.05.2010
(73) Patentinhaber: Weber Maschinenbau GmbH Breidenbach, 35236 Breidenbach (DE)
(72) Erfinder: WEBER, Günther, 17094 Gross Nemerow (DE)
(74) Vertreter: Manitz, Finsterwald & Partner GbR
(86) Internationale Anmeldenummer: PCT/EP2008/008375
(87) Internationale Veröffentlichungsnummer: WO 2009/046937

(56) Entgegenhaltungen:
- EP-A- 0 509 477
- DE-U1- 9 317 428
- US-A- 4 158 417
- US-A- 5 423 649

## Beschreibung

Die Erfindung betrifft ein Verfahren sowie eine Vorrichtung zum Pellen von Würsten oder anderen Produkten, insbesondere Lebensmittelprodukten.

Hierbei handelt es sich insbesondere um solche Würste, die beispielsweise eine Länge von mehreren Metern und einen Durchmesser von beispielsweise 5 bis 15 cm aufweisen. Derartige Würste werden insbesondere mit Hochgeschwindigkeitsslicern aufgeschnitten. Vor dem Aufschneiden müssen die Würste entpellt werden. Dies wurde bislang per Hand durchgeführt, was arbeits- und zeitaufwendig ist.

Aus der DE 699 15 681 T2 sind ein Verfahren und ein Apparat zur Entfernung der Hülle einer Wurst bekannt.

Die EP 0 509 477 A1 offenbart ein Verfahren gemäß dem Oberbegriff von Anspruch 1 und eine Vorrichtung gemäß dem Oberbegriff von Anspruch 14.

Aufgabe der Erfindung ist es, eine verbesserte Möglichkeit zu schaffen, das Pellen von Würsten oder anderen Produkten so weit wie möglich maschinell und dabei möglichst schnell durchführen zu können.

Gelöst wird die Aufgabe durch die Merkmale des Verfahrensanspruchs 1 und die Merkmale des Vorrichtungsanspruchs 14.

Grundsätzlich ist die Erfindung nicht nur zum Pellen von Würsten, sondern auch von anderen Lebensmittelprodukten oder anderen Produkten geeignet, die insbesondere von lang gestreckter Form und von einer Haut, Pelle oder Hülle umgeben sind, welche sich insbesondere als Ganzes abziehen lässt.

Nach einer Ausführungsform der Erfindung wird ein Verfahren zum Pellen von Würsten oder anderen Lebensmittelprodukten angegeben, bei dem an einem vorderen Wurstende, insbesondere im Bereich einer endseitigen Verjüngung der Wurst, ein Anschnitt geschaffen wird. Die Pelle wird im Bereich des Anschnitts an zwei in Umfangsrichtung voneinander beabstandeten Stellen mittels zweier Greiforgane gegriffen. Die Pelle wird sodann ausgehend von dem Anschnitt in dem Bereich zwischen den Greiforganen parallel zur Längserstreckung der Wurst eingeschnitten und durch eine Arbeitsbewegung der Greiforgane angehoben. Die Wurst wird parallel zur ihrer Längserstreckung, insbesondere relativ zu den die Pelle in der angehobenen Position festhaltenden Greiforganen, gefördert und dabei die Pelle von der Wurst abgezogen. Alternativ können die Greiforgane, insbesondere ausgehend von der angehobenen Position, in Richtung der Längserstreckung der Wurst bewegt werden, so dass dabei die Pelle von der nicht bewegten oder entgegengesetzt zu den Greiforganen bewegten Wurst abgezogen wird.

Nach einer Ausführungsform der Erfindung wird nach Ergreifen der Pelle durch die Greiforgane die Pelle durch eine erste Arbeitsbewegung der Greiforgane plan in eine parallel zur Auflagefläche der Wurst verlaufende Ebene gezogen und dann eingeschnitten. Das Anheben der Pelle aus der Ebene entspricht dann einer zweiten Arbeitsbewegung der Greiforgane. Vorteilhaft daran ist, dass durch die vorgegebene Ebene ein definierter Bereich gegeben ist, in dem der Einschnitt in die Pelle erfolgt. Ein zum Beispiel dazu verwendetes Messer muss deswegen nicht an den Anschnitt der Wurst gebracht werden, um die Pelle dort einzuschneiden. Damit wird keine aufwändige Einrichtung benötigt, um das Messer an den Anschnitt der Wurst zu bewegen.

Nach einer Ausführungsform der Erfindung liegt die Auflagefläche der Wurst im Wesentlichen in der Ebene, in die die Pelle durch eine erste Arbeitsbewegung der Greiforgane plan gezogen wird. Die Auflagefläche kann beispielsweise unterbrochen sein, so dass die Pelle im freien Raum von den Greifmitteln in der Ebene gehalten wird und zum Beispiel ein Messer die Pelle ohne Behinderung durch die Auflagefläche einschneiden kann. Weiterhin ist daran vorteilhaft, dass das Messer dann nicht mehr umpositioniert werden muss, um die Pelle der Wurst bis zum hinteren Wurstende durchzuschneiden, wenn die Wurst über das Messer bewegt wird.

Nach einer Ausführungsform der Erfindung wird der Anschnitt durch Abschneiden des Wurstendes, zum Beispiel im Wesentlichen senkrecht zur Längserstreckung der Wurst, geschaffen. Der Anschnitt kann auch durch Anbohren des Wurstendes im Wesentlichen parallel zur Längserstreckung der Wurst geschaffen werden.

Nach einer Ausführungsform der Erfindung erfolgt während des Planziehens der Pelle und des im Bereich des Anschnitts erfolgenden Einschneidens der Pelle im Wesentlichen keine Förderbewegung der Wurst relativ zu den Greiforganen. Damit verbleibt die Pelle zwischen den Greiforganen plan auf der Ebene und wird vorteilhafterweise durch die Greiforgane gespannt, so dass die Pelle eingeschnitten werden kann und nicht etwa aufgrund zu geringer Spannung über das Messer rutscht oder sich vor dem Messer zusammenfaltet, aber nicht geschnitten wird.

Nach einer Ausführungsform der Erfindung werden beim Anheben der Pelle die von den Greiforganen ergriffenen Pellenenden gleichzeitig von der Ebene und voneinander weg bewegt. Damit wird die sich über den Greiforganen befindende Wurst von den Greiforganen gewissermaßen umfahren.

Nach einer Ausführungsform der Erfindung wird die zum Anheben der Pelle dienende Arbeitsbewegung der Greiforgane als eine Überlagerung einer Hubbewegung und einer Auseinanderbewegung ausgeführt. Die Hubbewegung erfolgt im Wesentlichen gleichsinnig linear und die Auseinanderbewegung gegensinnig entlang einer gekrümmten Bahn.

Nach einer Ausführungsform der Erfindung beginnt die Förderbewegung der Wurst relativ zu den Greiforganen bereits während des Anhebens der Pelle. Dadurch lässt sich die Zeitdauer für den Pellvorgang verkürzen.

Nach einer Ausführungsform der Erfindung wird die Pelle während der Förderbewegung der Wurst relativ zu den Greiforganen unter Fortsetzung des am Anschnitt erfolgten Einschnitts bis zum hinteren Produktende weiter eingeschnitten.

Es kann vorgesehen sein, dass die Pelle von den Greiforganen einer zusätzlichen Halte- und/oder Fördereinrichtung zugeführt wird, die, wenn die Wurst zum Abziehen der Pelle gefördert wird, entweder die Pelle nur festhält oder an der Pelle aktiv zieht. Alternativ kann die Halte- und Fördereinrichtung gegenüber der nicht geförderten oder der zur Halte- und Fördereinrichtung entgegengesetzt bewegten Wurst bewegt werden, um die Pelle von der Wurst zu ziehen.

Nach einer Ausführungsform der Erfindung wird die Pelle durch die zweite Arbeitsbewegung der Greiforgane zwischen ein erstes Element und ein zweites Element gebracht. Bevorzugterweise sind die beiden Elemente walzenförmig ausgebildet. Das erste Element und das zweite Element fassen die Pelle und transportieren diese ab.

Nach einer Ausführungsform der Erfindung lassen die Greiforgane die Pelle nach dem Fassen der Pelle durch das erste und zweite Element los, so dass danach die Pelle mittels der Elemente von der Wurst entfernt wird. Dabei können die Greiforgane in der Endposition der zweiten Arbeitsbewegung verbleiben, bis die Wurst vollständig entpellt ist.

Nach einer Ausführungsform der Erfindung liegen die zwei in Umfangsrichtung voneinander beabstandeten Stellen, an denen die Pelle mittels der Greiforgane gegriffen wird, unterhalb einer horizontal ausgerichteten Mittelebene, die in der Mittelachse der Wurst verläuft. Dadurch wird es möglich, die Pelle im Bereich zwischen den Greiforganen durch eine im Wesentlichen vertikale verlaufende erste Arbeitsbewegung nach unten in eine Ebene zuziehen, in der der Einschnitt in die Pelle erfolgt.

Nach einer Ausführungsform der Erfindung weist jedes Greiforgan zwei fingerartige Greifer auf, welche die Pelle fassen.

Ferner betrifft die Erfindung eine Vorrichtung zum Pellen von Würsten oder anderen Lebensmittelprodukten, die Mittel und/oder Komponenten und/oder Einrichtungen zur Durchführung des erfindungsgemäßen Verfahrens umfasst.

Nachfolgend wird die vorliegende Erfindung rein beispielhaft anhand vorteilhafter Ausführungsformen und unter Bezugaufnahme auf die beigefügten Zeichnungen beschrieben. Es zeigen:
- Fig. 1: eine schematische Draufsicht auf eine erfindungsgemäße Vorrichtung, bei der Greiforgane die Pelle einer Wurst greifen,
- Fig. 2a: eine weitere schematische Draufsicht auf die erfindungsge- mäße Vorrichtung, bei der die Greiforgane die Pelle plan gezo- gen haben,
- Fig. 2b: eine schematische Seitenansicht der Situation von Fig. 2a,
- Fig. 3: eine weitere schematische Draufsicht auf die erfin- dungsgemäße Vorrichtung, bei der ein Anschnitt im Bereich der Pelle zwischen den Greiforganen erfolgt,
- Fig. 4: eine weitere schematische Draufsicht auf die erfin- dungsgemäße Vorrichtung, bei der die Greiforgane die Pelle nach erfolgter zweiter Arbeitsbewegung angeho- ben haben,
- Fig. 5: eine perspektivische Ansicht einer erfindungsgemäßen Vorrichtung,
- Fig. 6: eine Seitenansicht der erfindungsgemäßen Vorrichtung von Fig. 5, und
- Fig. 7 bis Fig. 19: verschiedene Darstellungen einer innerhalb der erfin- dungsgemäßen Vorrichtung angeordneten Pellstation.

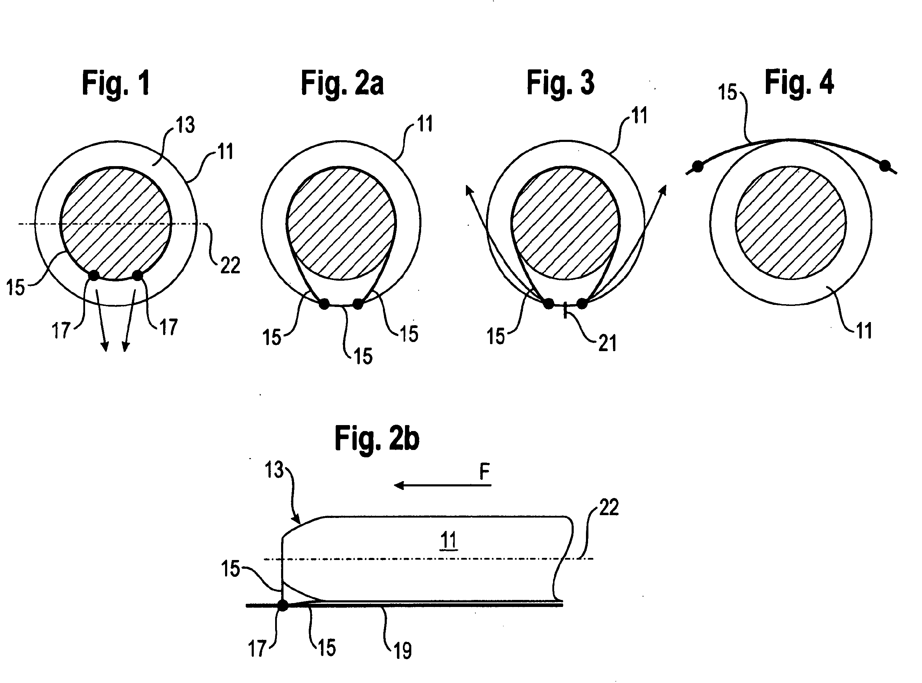

Die Fig. 1 zeigt schematisch eine erfindungsgemäße Vorrichtung, bei der zunächst am vorderen Ende einer Wurst 11 ein definierter Anschnitt hergestellt wird. Dieser Anschnitt wird insbesondere in einem sich verjüngenden Kuppenabschnitt 13 der Wurst 11 geschaffen. Hierdurch wird gleichzeitig der so genannte Produktclip entfernt, der mit der Pelle zusammenwirkt und die Wurst verschließt.

Der Anschnitt kann beispielsweise durch Wegschneiden der Kuppenspitze geschaffen werden. Dies kann beispielsweise - sofern vorgesehen - in einem Arbeitsschritt erfolgen, bei welchem die Wurst auf die eigentliche Pellstation angehoben und dabei an einer Klinge vorbeigefahren wird. Ein solches Abschneiden kann insbesondere bei vergleichsweise kleinkalibrigen Produkten gewählt werden. Alternativ kann das vordere Wurstende stirnseitig angebohrt werden, um den Anschnitt zu schaffen. Hierzu wird beispielsweise stirnseitig mittels eines Hohlbohrers ein z.B. etwa 30 mm großes und etwa 5 mm tiefes Loch in das vordere Produktende gebohrt. Da die Wurstkuppe später ohnehin nicht verwendet wird, ist der Kontakt des Bohrers mit der Wurst hinsichtlich einer möglichen Kontamination unproblematisch.

Nach dem Anschneiden bzw. Anbohren wird die Wurst 11 auf eine Pellebene gebracht, z.B. quer zur eigentlichen Förderrichtung F, wie dies in Fig. 2b dargestellt ist, herangeführt und ggf. gleichzeitig angehoben, und mittels Förderbändern zur eigentlichen Pellstation transportiert. Die Pellstation beinhaltet eine definierte Ebene, die beispielsweise mit der Auflagefläche 19 (Fig. 2b) für die Wurst, übereinstimmt.

Sobald das vordere Produktende mit dem Anschnitt z.B. durch eine Lichtschranke der Pellstation detektiert wird, werden zwei Greiforgane 17 aktiviert. Diese greifen in die Stirnseite des Produktes ein und ergreifen dabei die Pelle 15 an zwei in Umfangsrichtung voneinander beabstandeten Stellen (Fig. 1). Die voneinander beabstandeten Stellen liegen bevorzugt unterhalb einer horizontal verlaufenden Mittelebene 22, in der die Mittelachse der Wurst 11 liegt.

Die Ausgestaltung der Greiforgane 17 ist grundsätzlich beliebig. Insbesondere sind sie derart ausgebildet, dass sie wie Daumen und Zeigefinger einer menschlichen Hand die Pelle 15 erfassen und festhalten können. Insbesondere können die Greiforgane 17 jeweils wie die Backen einer Kombizange ausgestaltet sein.

Anschließend führen die Greiforgane 17 eine erste Arbeitsbewegung in Richtung der Auflagefläche 19 aus, um auf diese Weise die Unterseite der Pelle 15 nach unten glatt zu ziehen, so dass die Unterseite der Pelle 15 im Bereich zwischen den beiden Greiforganen 17 im Wesentlichen planparallel zur Auflagefläche 19 der Wurst ist, wie dies in Fig. 2a gezeigt ist.

Anschließend wird mittels einer Schneidvorrichtung 21 ausgehend von dem Anschnitt die Pelle 15 in dem Bereich zwischen den Greiforganen 17 parallel zur Längserstreckung der Wurst eingeschnitten.

Hierdurch können anschließend die Greiforgane 17, indem sie eine zweite Arbeitsbewegung ausführen, die Pelle von der Auflagefläche 19 weg anheben. Die zweite Arbeitsbewegung kann eine Überlagerung einer Hubbewegung und einer Auseinanderbewegung der Greiforgane 17 sein, wie es in Fig. 3 durch die Pfeile angedeutet ist. Die Greiforgane 17 werden beide linear nach oben, insofern also gleichsinnig, bewegt, zusätzlich aber auf einer insbesondere gekrümmten Bahn gegensinnig auseinander bewegt. Gemeinsam beschreiben die Greiforgane 17 dabei zumindest näherungsweise ein "U".

Das Ergebnis dieser zweiten Arbeitsbewegung zeigt Fig. 4. Die Pelle 15 ist mittels der Greiforgane 17 soweit angehoben worden, dass durch eine Förderbewegung der Wurst 11 relativ zu den Greiforganen 17 in Förderrichtung F die Pelle 15 als Ganzes von der Wurst abgezogen wird. Alternativ können die Greiforgane 17 bei ruhender Wurst oder ebenfalls nach vorne bewegter Wurst nach hinten bewegt werden. Entscheidend ist also eine Relativbewegung zwischen Wurst und Greiforganen oder, allgemeiner, eine die Pelle festhaltende Halteeinrichtung. Während sich die Wurst auf diese Weise gewissermaßen "aus der Pelle heraus schält", wird die Pelle 15 an den beiden Pellen-Enden, die durch das Einschneiden gemäß Fig. 3 entstanden sind, von den beiden Greiforganen 17 festgehalten. Nach Abschluss des Pellvorgangs lassen die Greiforgane 17 die Pellen-Enden los, so dass die abgezogene Pelle frei zur Entsorgung ist.

Die Förderbewegung der Wurst 11 relativ zu den Greiforganen 17 kann beginnen, sobald die zweite Arbeitsbewegung der Greiforgane 17 einsetzt, also während des Anhebens der Pelle 15 weg von der Auflagefläche 19.

Solange die Wurst nicht relativ zu den Greiforganen 17 gefördert wird, erfolgt das Einschneiden mittels der Schneidvorrichtung 21 lediglich im vorderen Bereich der Wurst. Die Schneidvorrichtung 21 bleibt allerdings in ihrer aktiven Schneidstellung, so dass während der anschließenden Förderbewegung der Wurst die Pelle 15 unter Fortsetzung des anfänglichen Einschnittes über die gesamte Länge der Wurst bis zum hinteren Produktende eingeschnitten wird.

Eine Besonderheit der erfindungsgemäßen Schneidvorrichtung 21 besteht darin, dass sie in einer bevorzugten Ausführungsform so ausgestaltet sein kann, dass sie derart exakt zwischen Pelle und Produkt schneidet, dass das Produkt selbst nicht mit der Schneide oder Klinge in Kontakt gelangt. Dies kann durch ein z.B. aus Edelstahl bestehendes, der eigentlichen Schneide oder Klinge zugeordnetes Schutzelement der Schneidvorrichtung erfolgen, das stets zwischen Pelle und Produkt und somit zwischen Schneide bzw. Klinge und Produkt liegt.

Hierdurch wird in vorteilhafter Weise zum einen das Produkt nicht beschädigt, was sich insbesondere positiv auf das Aussehen der Wurstscheiben auswirkt, die durch Aufschneiden der entpellten Wurst mittels eines Slicers erzeugt werden. Zum anderen wird das Produkt durch das Einschneiden nicht kontaminiert, da die Schneidvorrichtung 21 lediglich mit der Pelle 15 in Kontakt gelangt.

Beim Fördern der Wurst durch die Pellstation relativ zu den Greiforganen 17 kann vorgesehen sein, dass z.B. mittels einer Lichtschranke überprüft wird, ob die Pelle, die zeitgleich während des Förderns von der Wurst abgezogen wird, nicht abgerissen ist.

Die Entsorgung der Pelle 15 kann beispielsweise in einen Container oder eine andere Auffangeinrichtung erfolgen. Des Weiteren ist es möglich, die Pelle insbesondere automatisch zu schreddern, um auf diese Weise das Abfallvolumen zu verkleinern. Ferner ist es möglich, die Pelle abzusaugen, um sie auf diese Weise vollständig aus dem Bereich der Pellstation zu entfernen.

Ein besonderer Vorteil der Erfindung besteht darin, dass die Pelle 15 als Ganzes von der Wurst abgezogen wird. Es ist somit nur ein einziger Pellvorgang erforderlich, was sich vorteilhaft auf die Arbeitsgeschwindigkeit auswirkt.

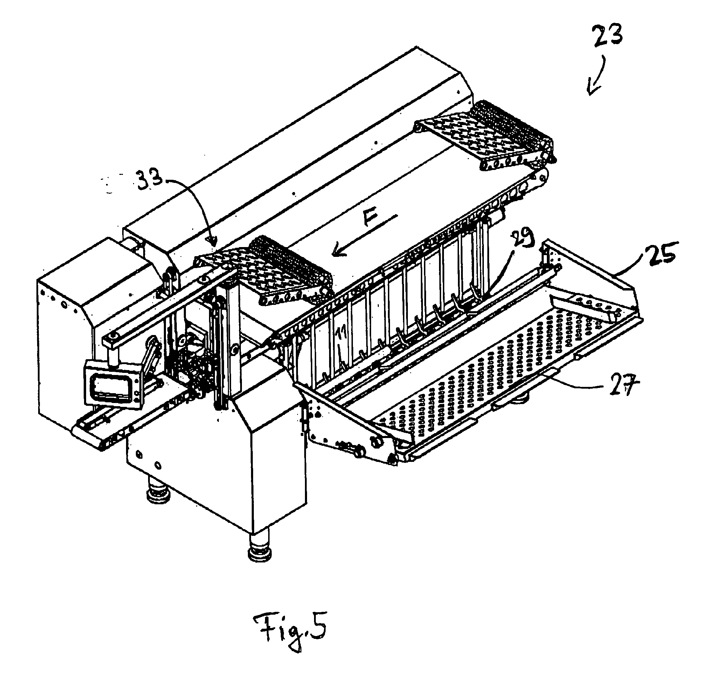

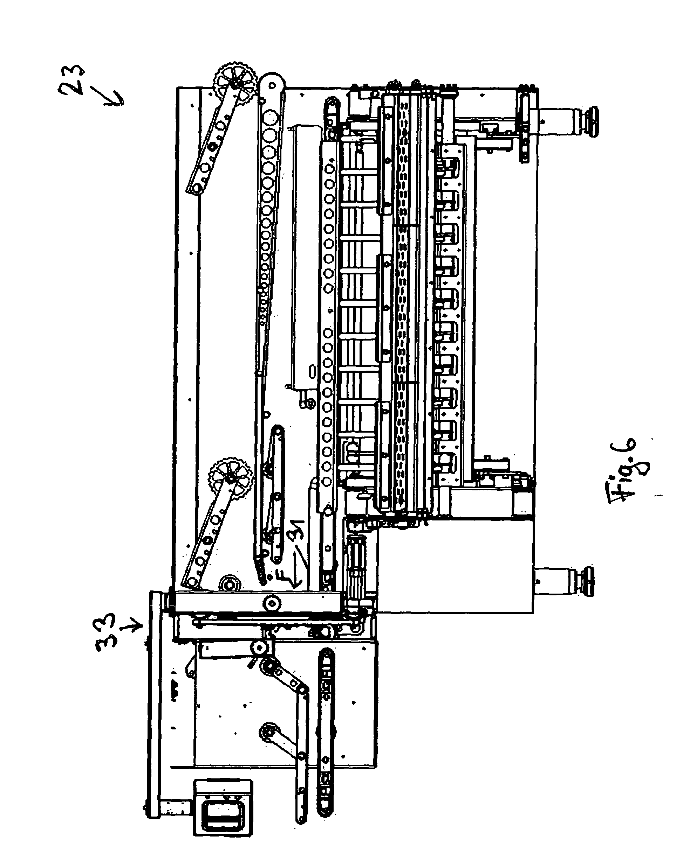

Die Fig. 5 zeigt eine perspektivische Ansicht einer erfindungsgemäßen Vorrichtung 23. Die erfindungsgemäße Vorrichtung 23 hat eine Zuführeinrichtung 25 mit einer Aufnahmefläche 27, auf die Würste, wie die Wurst 11, gelegt werden können und auf der die Würste aufgrund der Schräge der Aufnahmefläche 27 durch ihre Gewichtskraft jeweils einzeln einer Hebeeinrichtung 29 zugeführt werden. Von der Hebeeinrichtung 29 wird die Wurst 11 auf ein Förderband 31, das in Fig. 6, die eine seitliche Ansicht der Vorrichtung 23 zeigt, dargestellt ist, gehoben.

Beim Heben der Wurst 11 auf das Förderband 31 wird die Wurst 11 mit dem Ende, das einer Pellstation 33, die in der erfindungsgemäßen Vorrichtung 23 angeordnet ist, zugewandt ist, mit einen definierten Anschnitt versehen. Hierdurch wird gleichzeitig ein eventuell vorhandener Produktclip an diesem Wurstende entfernt, der die Pelle verschließt. Durch das Förderband 31 wird die Wurst 11 längs der Förderrichtung F bewegt und so der Pellstation 33 zugeführt.

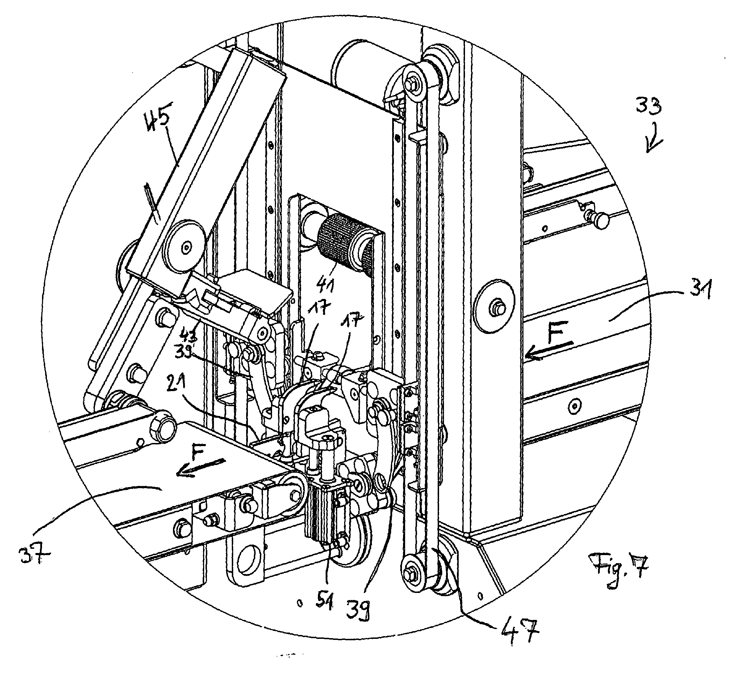

Fig. 7 zeigt eine perspektivische Ansicht der Pellstation 33. Die Pellstation 33 umfasst Greiforgane 17. Die Greiforgane 17 sind zangenförmig ausgebildet und in Fig. 7 in geöffneter Stellung gezeigt. Die Greiforgane 17 können ähnlich wie die Backen einer Kombizange oder Daumen und Zeigefinger einer menschlichen Hand einen Gegenstand, hier die Pelle einer Wurst, greifen. Insbesondere können die Greiforgane 17 in die Stirnseite und damit in den Anschnitt einer mittels des Förderbands 31 an die Greiforgane 17 herangeführten Wurst, die z.B. mittels Sensoren wie etwa einer Lichtschranke detektiert wird, eingreifen.

Die Greiforgane 17 befinden sich in der Pellstation 33 im Raum zwischen dem Förderband 31 und einem weiteren Förderband 37, das zum Abtransport der entpellten Wurst vorgesehen ist. Die Greiforgane 17 sind jeweils an einer Haltevorrichtung 39 angeordnet. Die Haltevorrichtung 39 ist über einen Antrieb 47 insbesondere nach oben und zur Seite beweglich. Ferner ist an jeder Haltevorrichtung 39 ein Elektromotor 51 angeordnet, der als Antrieb zum Öffnen und Schließen des Greiforgans 17 vorgesehen ist. Ferner kann jedes Greiforgan 17 zur Durchführung der ersten Arbeitsbewegung der Greiforgane 17 abgesenkt werden.

Zwischen den Greiforganen 17 ist eine Schneidvorrichtung 21 angeordnet. Diese weist insbesondere an ihrer Oberseite eine Klinge oder dergleichen auf, die zum Schneiden der Pelle der Wurst vorgesehen ist. Die Position der Schneidvorrichtung 21 kann von der in Fig. 7 dargestellten Position insbesondere in der Höhe und in entgegengesetzter Richtung zur Förderrichtung F verstellt werden.

Die Pellstation 33 umfasst außerdem eine erste Walze 41, die in einer festen Position in der Pellstation 33 angeordnet ist. Ferner hat die Pellstation 33 eine zweite Walze 43, die an einem Schwenkarm 45 angeordnet ist und so von einer hier gezeigten Position zur ersten Walze 41 hingeschwenkt werden kann.

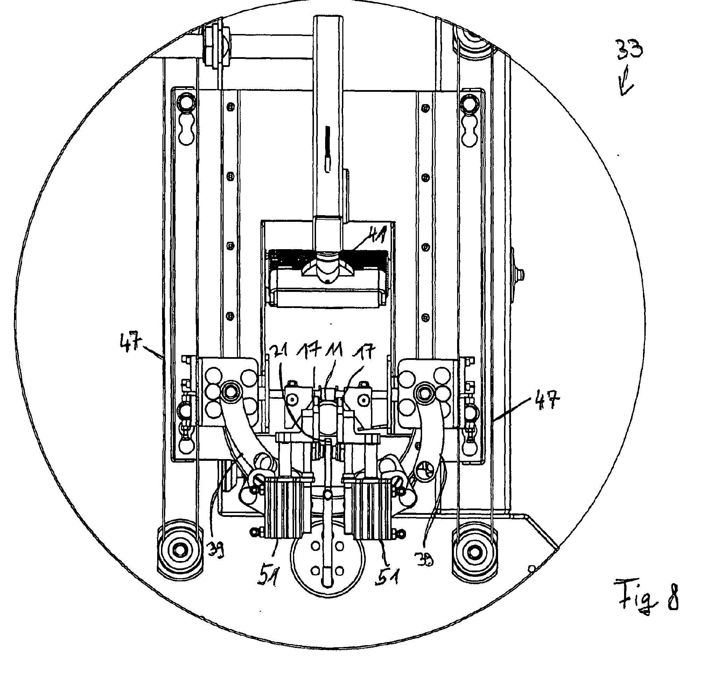

Fig. 8 zeigt die der Fig. 7 entsprechende Vorderansicht der Pellstation 33, wobei aus der Fig. 8 zu erkennen ist, dass eine Wurst 11 mit ihrer Stirnseite und damit mit dem definierten Anschnitt an die geöffneten Greiforgane 17 heran transportiert worden ist. Die Schneidvorrichtung 21 befindet sich unterhalb der Pelle und - wie aus Fig. 7 ersichtlich ist - noch in einer Position vor der Wurst, so dass mit der Schneidvorrichtung 21 noch nicht an der Wurst geschnitten wird.

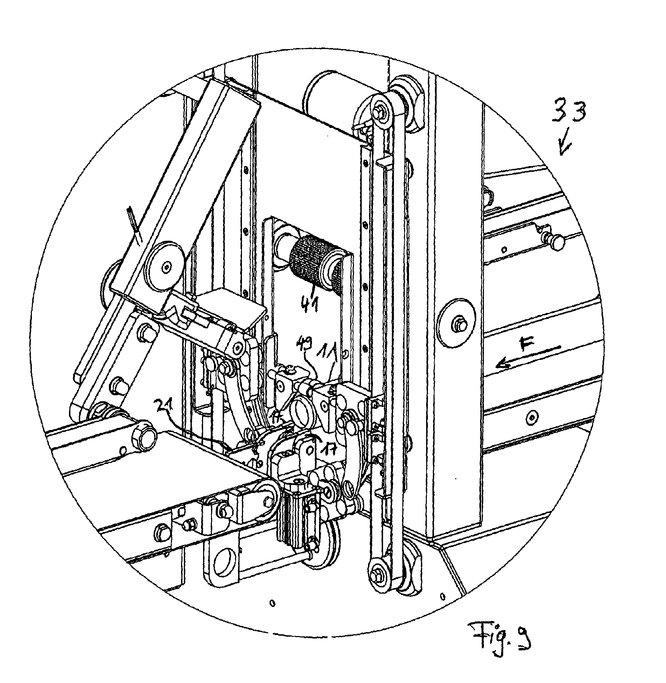

Die Fig. 9 zeigt eine seitliche Ansicht der Pellstation 33 mit nun geschlossenen Greiforganen 17. Dabei haben die Greiforgane 17 die Pelle der Wurst 11 im Bereich des Anschnitts an zwei in Umfangsrichtung voneinander beabstandeten Stellen gegriffen. Die Schneidvorrichtung 21 befindet sich noch im Raum vor der Wurst 11, so dass die Pelle noch nicht eingeschnitten worden ist.

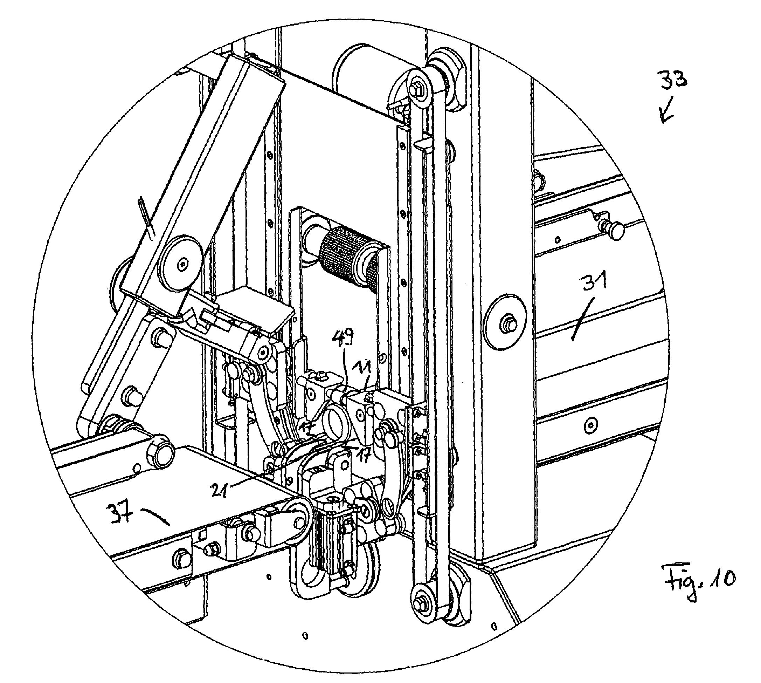

Fig. 10 zeigt eine seitliche Ansicht der Pellstation 33, wobei die Greiforgane 17 die Pelle im Bereich des Anschnitts gegriffen haben. Die Greiforgane 17 ziehen durch eine erste Arbeitsbewegung die Pelle plan nach unten in eine Ebene. Sodann wird die Schneidvorrichtung 21 in Richtung der Pelle und nach oben in Schneidstellung gefahren, um die Pelle ausgehend von dem Anschnitt in dem Bereich zwischen den Greiforganen 17 parallel zur Längserstreckung der Wurst 11 einzuschneiden. Bevorzugt liegen das Förderband 31 und das Förderband 37 ebenso in der Ebene, in die die Pelle plan gezogen wird. Dadurch kann die Schneidvorrichtung 21 in der oben genannten Schneidstellung verbleiben, während die Wurst 11 in Förderrichtung F vom Förderband 31 zum Förderband 37 transportiert und damit über die Schneidvorrichtung 21 hinweg bewegt wird, so dass die Pelle im unteren Bereich und in Längsrichtung der Wurst 11 durchgeschnitten wird.

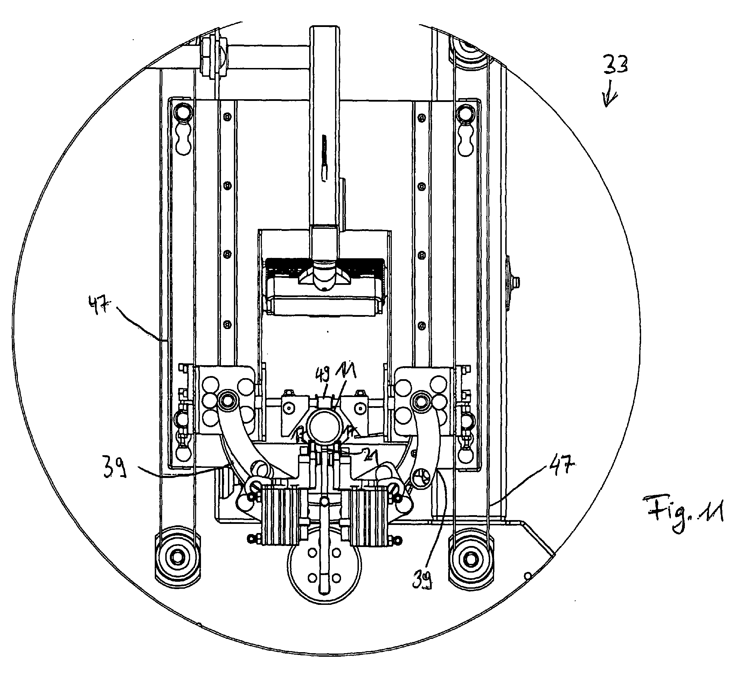

Fig. 11 zeigt eine Vorderansicht der Pellstation 33, bei der die Schneidvorrichtung 21 in die Ebene gefahren worden ist, in der auch die Förderbänder 31 und 37 liegen und, was hier nicht zu sehen ist, in Richtung der Wurst bewegt ist, so dass die Pelle der Wurst 11 nach erfolgter erster Arbeitsbewegung der Greiforgane 17, durch welche die Pelle nach unten und plan in diese Ebene gezogen worden ist, eingeschnitten wird. Die Schneidvorrichtung 21 bleibt sodann in dieser Position und die Wurst 11 wird während einer zweiten Arbeitsbewegung der Greiforgane 17, in der die Greiforgane 17 auseinander bewegt und angehoben werden (siehe unten), über die Schneidvorrichtung 21 hinweg bewegt. Ein Niederhalter 49 verhindert dabei, dass die Wurst aufgrund der Hub- und Auseinanderbewegung der Greiforgane 17 nach oben gezogen wird.

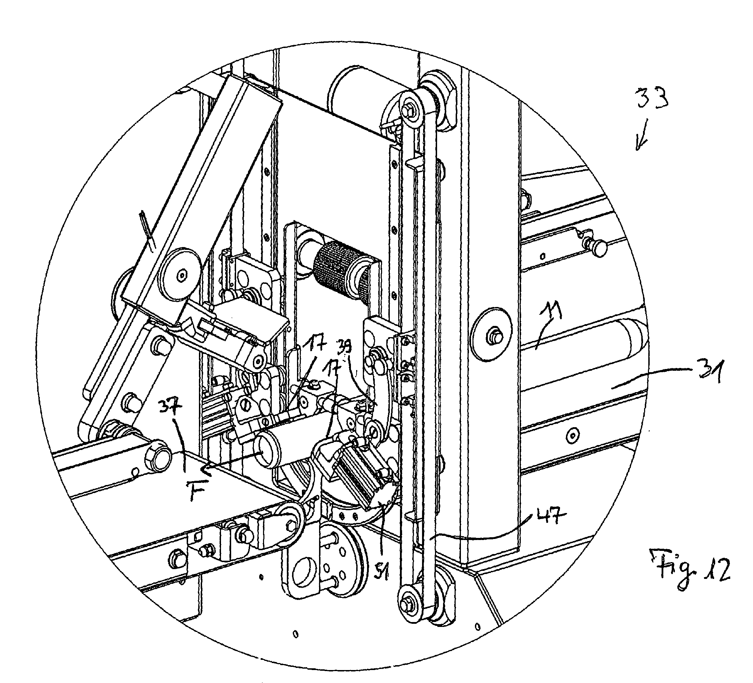

Fig. 12 zeigt eine perspektivische Ansicht der Pellstation 33, bei der die Greiforgane 17 sich in einer Zwischenstellung seitlich der Wurst 11 befinden. Die Greiforgane 17 greifen nach wie vor die (hier nicht eingezeichnete) Pelle der Wurst 11 und ziehen so die Pelle von der Wurst 11 ab. Dabei wird die Wurst 11 durch das Förderband 31 in Förderrichtung F bewegt, so dass diese Relativbewegung zwischen Wurst 11 und Greiforganen 17 das Abziehen der Pelle 15 unterstützt.

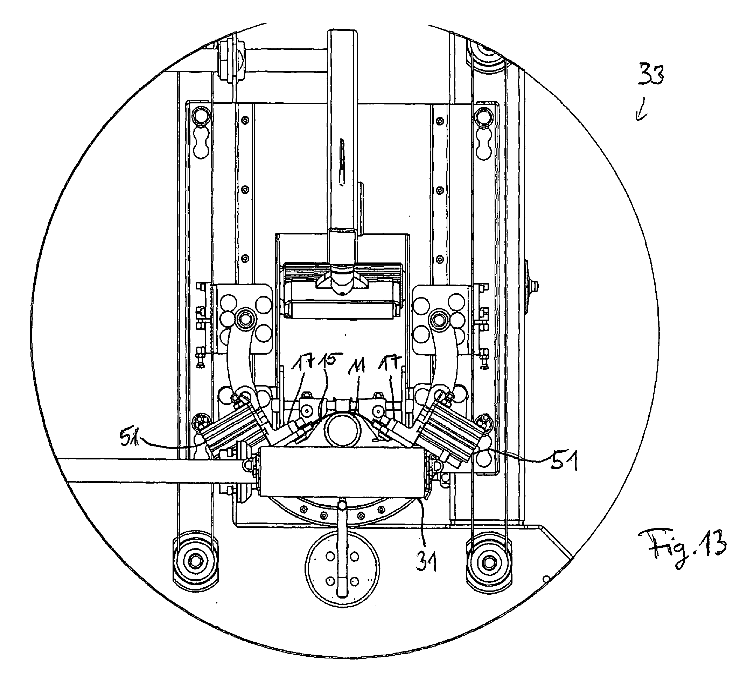

Fig. 13 zeigt die Vorderansicht der Pellstation 33, bei der sich, wie bereits in Bezug auf Fig. 12 erwähnt, die Greiforgane 17 seitlich der Wurst 11 etwa in Höhe der Mittelebene 22 (Fig. 1) befinden und aufgrund der Hubbewegung einerseits und der Auseinanderbewegung andererseits die - hier schematisch eingezeichnete - Pelle 15 beginnend von dem Einschnitt an der Unterseite von der Wurst 11 abziehen.

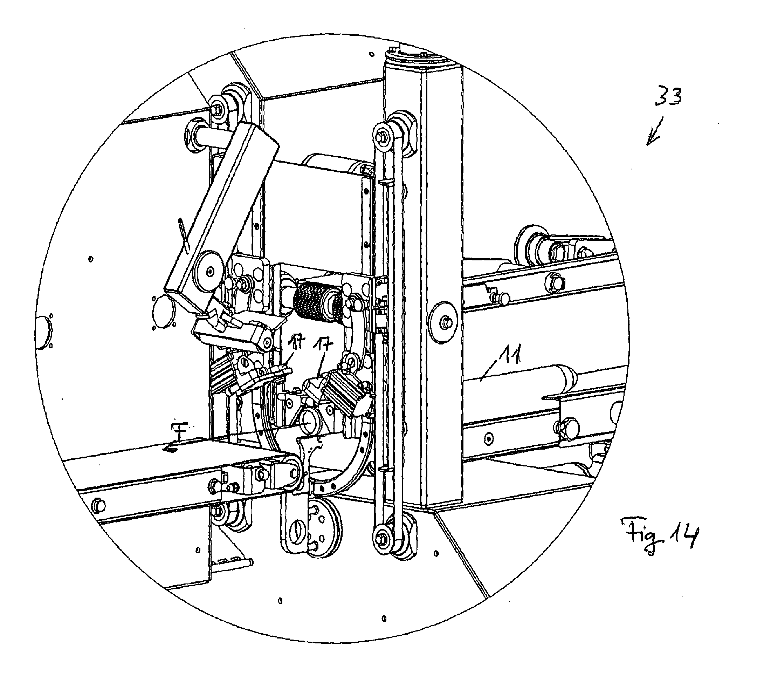

Fig. 14 zeigt eine perspektivische Ansicht der Pellstation 33, bei der sich die Greiforgane 17 im Verlauf der zweiten Arbeitsbewegung weiterbewegt haben und sich seitlich und oberhalb der Wurst 11 befinden. Wie der Vergleich mit Fig. 12 zeigt, ist tatsächlich die Wurst 11 in Förderrichtung F bereits weiter transportiert worden, als dies in Fig. 14 gezeigt ist.

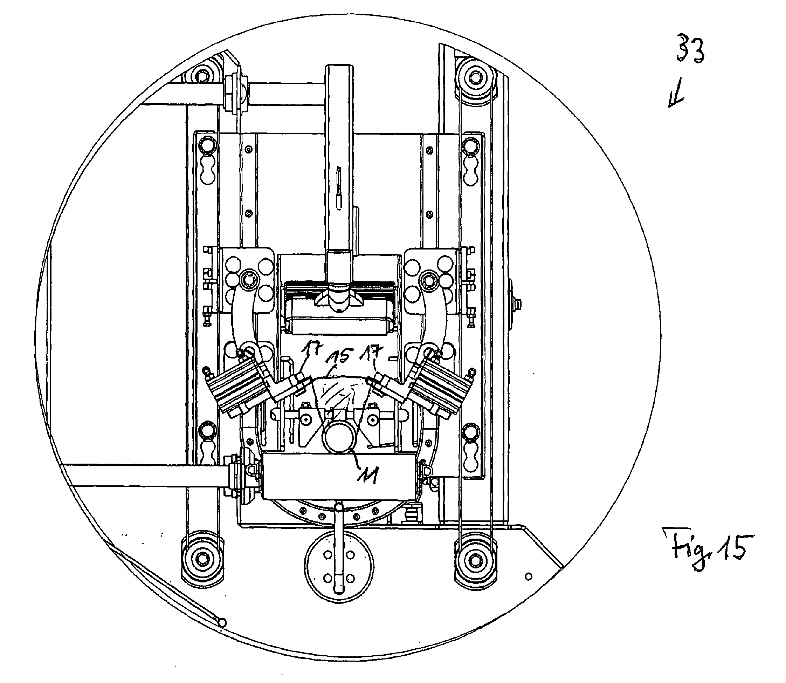

Fig. 15 zeigt eine der Fig. 14 entsprechende Vorderansicht der Pellstation 33, in welche schematisch die Pelle 15 eingezeichnet ist.

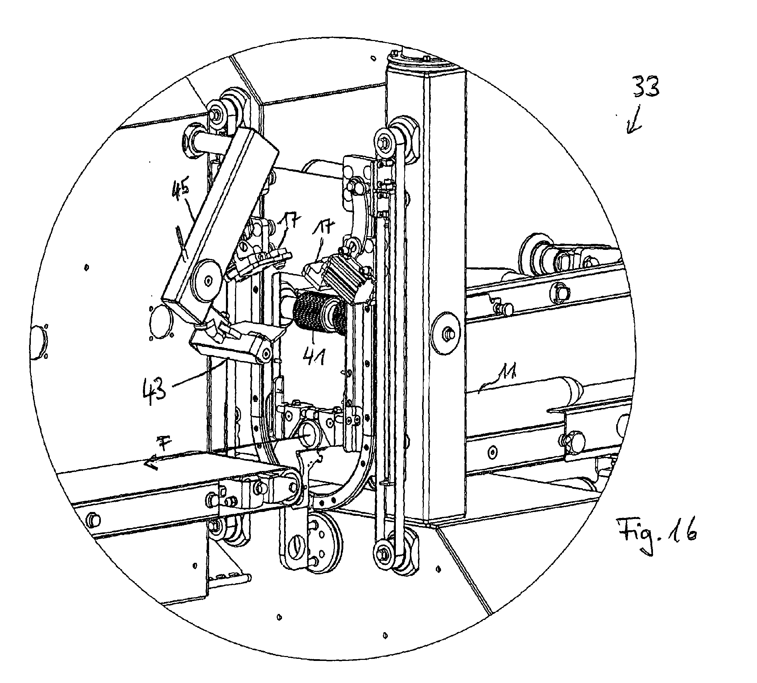

Fig. 16 zeigt eine perspektivische Ansicht der Pellstation 33, bei der die Greiforgane 17 die Endposition der zweiten Arbeitsbewegung erreicht haben, in der sie sich oberhalb des Wirkungsbereiches zweier Walzen 41, 43 befinden. Hierdurch befindet sich die noch von den Greifern 17 gehaltene Pelle in einem Bereich zwischen der ersten Walze 41 und der zweiten Walze 43, wobei letztere ihre Endstellung noch nicht erreicht hat. Die Wurst 11 ist tatsächlich zwischenzeitlich weiter als in Fig. 12 gezeigt transportiert worden, so dass die Greiforgane 17 auf ihrem Weg in die Endposition entsprechend mehr Pelle von der Wurst 11 abziehen konnten. Nachdem die Endposition der Greiforgane 17 erreicht ist, wird der Schwenkarm 45 der zweiten Walze 43 in Richtung der ersten Walze 41 geschwenkt, so dass die beiden Walzen 41, 43 die dazwischen befindliche Pelle fassen. Erst danach werden die Greiforgane 17 geöffnet, so dass diese die Pelle loslassen.

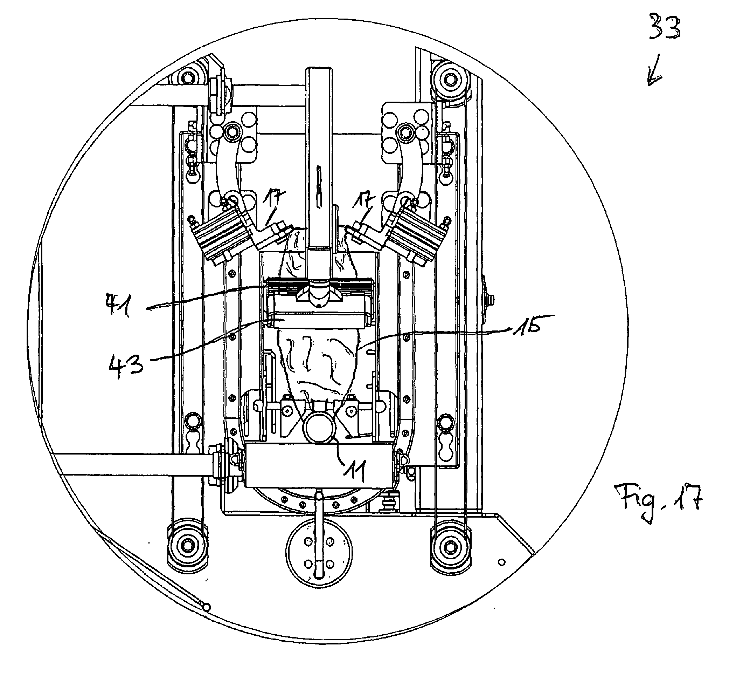

Fig. 17 zeigt die der Fig. 16 entsprechende Vorderansicht der Pellstation 33. Wie durch Zusammenschau der Fig. 11, 13, 15 und 17 erkennbar ist, beschreiben die Greiforgane 17 im Verlauf der zweiten Arbeitsbewegung in etwa ein "U" aufgrund der linear nach oben gerichteten Hubbewegung und der gleichzeitig stattfindenden Auseinanderbewegung der beiden Greiforgane 17 relativ zueinander.

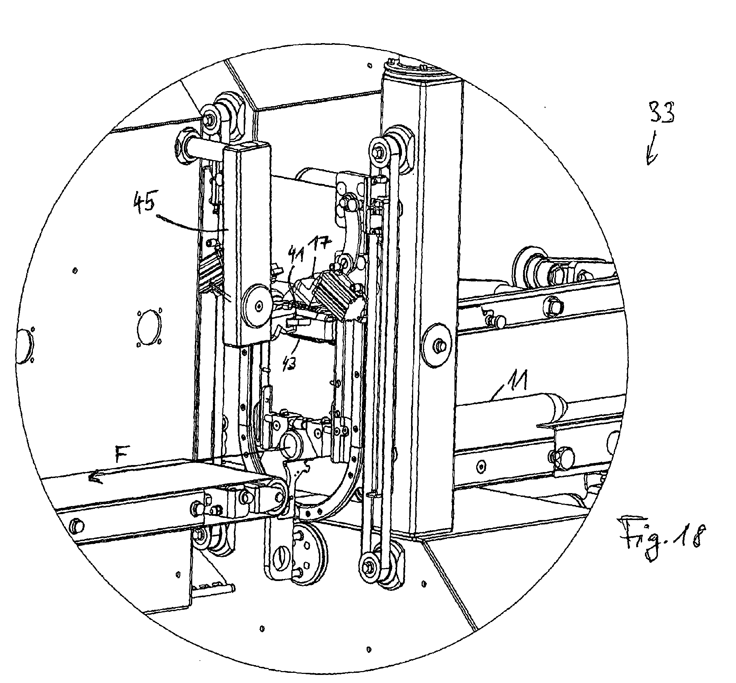

Fig. 18 zeigt eine perspektivische Ansicht der Pellstation 33, bei der das erste walzenförmige Element 41 und das zweite walzenförmige Element 43 aneinander angeordnet sind, so dass in dem dadurch gebildeten Walzenspalt die Pelle der Wurst 11 gefasst wird. Dabei wurde - anders als gezeigt - die Wurst 11 noch weiter als in Fig. 16 in Förderrichtung F bewegt. Nach dem Erfassen der Pelle durch die Walzen werden die Greiforgane geöffnet. Zumindest eine Walze 41, 43 kann mittels eines Antriebs in Rotation versetzt werden, so dass die Pelle nun von den beiden Walzen 41, 43 bei der Bewegung der Wurst 11 in Richtung der Förderrichtung F von der Wurst abgezogen wird, bis das Ende der Wurst erreicht ist und die Wurst 11 gänzlich entpellt ist. Die Förderbewegungen der Förderbänder für die Wurst 11 einerseits und des Walzenpaares 41, 43 andererseits sind aufeinander abgestimmt.

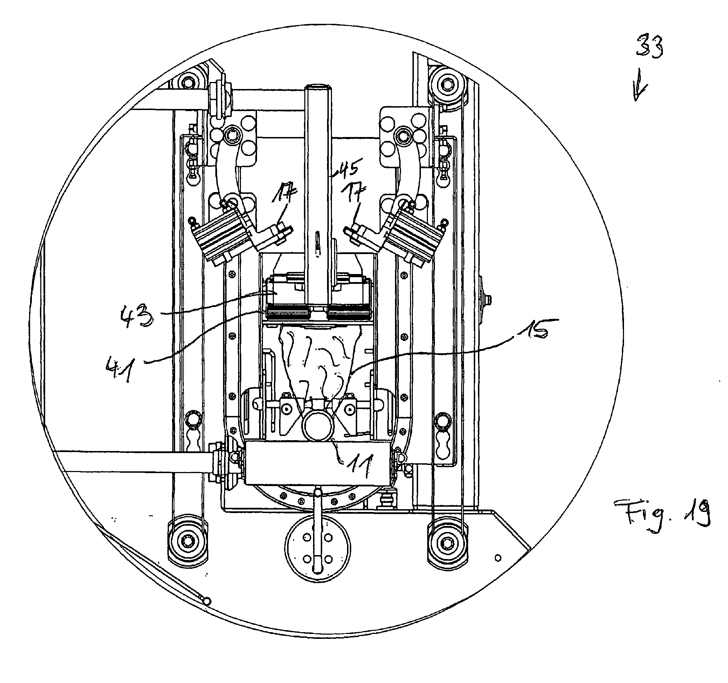

Fig. 19 zeigt die der Fig. 18 entsprechende Vorderansicht der Pellstation 33.

### Bezugszeichenliste

- 11: Wurst
- 13: Verjüngung, Wurstkuppe
- 15: Pelle
- 17: Greiforgan
- 19: Auflagefläche
- 21: Schneidvorrichtung
- 22: Mittelebene
- 23: Vorrichtung
- 25: Zuführeinrichtung
- 27: Aufnahmefläche
- 29: Hebeeinrichtung
- 31: Förderband
- 33: Pellstation
- 37: Förderband
- 39: Haltevorrichtung
- 41: erste Walze
- 43: zweite Walze
- 45: Schwenkarm
- 47: Antrieb
- 49: Niederhalter
- 51: Antrieb

## Patentansprüche

1. Verfahren zum Pellen von Würsten (11) oder anderen Lebensmittelprodukten, bei dem
- an einem vorderen Wurstende, insbesondere im Bereich einer endseitigen Verjüngung (13) der Wurst, ein Anschnitt geschaffen wird,
**dadurch gekennzeichnet, dass**
- die Pelle (15) im Bereich des Anschnitts an zwei in Umfangsrichtung voneinander beabstandeten Stellen mittels zweier Greiforgane (17) gegriffen wird,
- insbesondere die Pelle (15) durch eine erste Arbeitsbewegung der Greiforgane (17) plan in eine parallel zur Auflagefläche (19) der Wurst verlaufende Ebene gezogen wird,
- die Pelle (15) ausgehend von dem Anschnitt in dem Bereich zwischen den Greiforganen (17) parallel zur Längserstreckung der Wurst eingeschnitten wird,
- die Pelle (15) durch eine Arbeitsbewegung, insbesondere zweite Arbeitsbewegung, der Greiforgane (17), insbesondere von der Ebene weg, angehoben wird, und
- die Wurst parallel zur ihrer Längserstreckung gefördert und dabei die Pelle (15) von der Wurst abgezogen wird.

2. Verfahren nach Anspruch 1,
**dadurch gekennzeichnet,**
**dass** die Auflagefläche (19) der Wurst im Wesentlichen in einer Ebene liegt, in die die Pelle durch eine erste Arbeitsbewegung der Greiforgane (17) plan gezogen wird.

3. Verfahren nach Anspruch 1 oder 2,
**dadurch gekennzeichnet,**
**dass** die Pelle (15) durch eine erste Arbeitsbewegung der Greiforgane (17) plan auf die Auflagefläche (19) der Wurst gezogen wird.

4. Verfahren nach einem der vorhergehenden Ansprüche,
**dadurch gekennzeichnet,**
**dass** der Anschnitt durch Abschneiden des Wurstendes, insbesondere im Wesentlichen senkrecht zur Längserstreckung der Wurst (11), geschaffen wird.

5. Verfahren nach einem der Ansprüche 1 bis 3,
**dadurch gekennzeichnet,**
**dass** der Anschnitt durch Anbohren des Wurstendes im Wesentlichen parallel zur Längserstreckung der Wurst (11) geschaffen wird.

6. Verfahren nach einem der vorhergehenden Ansprüche,
**dadurch gekennzeichnet,**
**dass** während eines Planziehens der Pelle (15) und des im Bereich des Anschnitts erfolgenden Einschneidens der Pelle (15) im Wesentlichen keine Förderbewegung der Wurst relativ zu den Greiforganen (17) erfolgt.

7. Verfahren nach einem der vorhergehenden Ansprüche,
**dadurch gekennzeichnet,**
**dass** beim Anheben der Pelle (15) die von den Greiforganen (17) ergriffenen Pellenenden gleichzeitig von einer Ebene, insbesondere Auflagefläche (19), in die die Pelle (15) durch eine erste Arbeitsbewegung der Greiforgane (17) plan gezogen wird, und voneinander weg bewegt werden.

8. Verfahren nach einem der vorhergehenden Ansprüche,
**dadurch gekennzeichnet,**
**dass** die zum Anheben der Pelle (15) dienende Arbeitsbewegung der Greiforgane (17) als eine Überlagerung einer Hubbewegung und einer Auseinanderbewegung ausgeführt wird, wobei die Hubbewegung im Wesentlichen gleichsinnig linear und die Auseinanderbewegung gegensinnig entlang einer gekrümmten Bahn erfolgt.

9. Verfahren nach einem der vorhergehenden Ansprüche,
**dadurch gekennzeichnet,**
**dass** die Förderbewegung der Wurst (11), insbesondere relativ zu den Greiforganen (17), während des Anhebens der Pelle (15) beginnt.

10. Verfahren nach einem der vorhergehenden Ansprüche,
**dadurch gekennzeichnet,**
**dass** die Pelle (15) während der Förderbewegung der Wurst (11), insbesondere relativ zu den Greiforganen (17), unter Fortsetzung des am Anschnitt erfolgten Einschnitts bis zum hinteren Produktende weiter eingeschnitten wird.

11. Verfahren nach einem der vorhergehenden Ansprüche,
**dadurch gekennzeichnet,**
**dass** die Pelle (15) durch die Arbeitsbewegung der Greiforgane (17) zwischen ein erstes, insbesondere walzenförmiges, Element (41) und ein zweites, insbesondere walzenförmiges, Element (43) gebracht wird, wobei das erste Element (41) und das zweite Element (43) die Pelle (15) fassen und insbesondere durch einen von den Elementen gebildeten Spalt, insbesondere Walzenspalt, hindurch abtransportieren.

12. Verfahren nach Anspruch 11,
**dadurch gekennzeichnet,**
**dass** die Greiforgane (17) die Pelle (15) nach dem Fassen der Pelle (15) durch das erste Element (41) und das zweite Element (43) loslassen.

13. Verfahren nach einem der vorhergehenden Ansprüche,
**dadurch gekennzeichnet,**
**dass** die zwei in Umfangsrichtung voneinander beabstandeten Stellen, an denen die Pelle (15) mittels der Greiforgane (17) gegriffen wird, unterhalb einer horizontal ausgerichteten Mittelebene (22), in der die Mittelachse der Wurst (11) verläuft, liegen.

14. Vorrichtung zum Pellen von Würsten (11) oder anderen Lebensmittelprodukten, insbesondere zur Durchführung eines Verfahrens nach einem der vorhergehenden Ansprüche, mit
- einer Vorrichtung zur Schaffung eines Anschnitts am vorderen Produktende,
- zwei Greiforganen (17),
- einer Schneidvorrichtung (21), die dazu ausgebildet ist, die Pelle (15) in einem Bereich zwischen den Greiforganen (17) parallel zur Längserstreckung der Wurst (11) einzuschneiden und
- einer Fördereinrichtung, die dazu ausgebildet ist, die Wurst (11) parallel zur ihrer Längserstreckung zu fördern,
**dadurch gekennzeichnet,**
- **dass** die zwei Greiforgane (17) dazu ausgebildet sind, die Pelle (15) im Bereich des Anschnitts zunächst an zwei in Umfangsrichtung voneinander beabstandeten Stellen zu ergreifen, insbesondere dann plan in eine parallel zur Auflagefläche (19) der Wurst verlaufende Ebene, insbesondere auf die Auflagefläche (19) der Wurst, zu ziehen und anschließend anzuheben, und
- **dass** die Schneidvorrichtung (21) dazu ausgebildet ist, die Pelle (15) ausgehend von dem Anschnitt in dem Bereich zwischen den Greiforganen (17) parallel zur Längserstreckung der Wurst (11) einzuschneiden.

## Claims

1. A method for the skinning of sausages (11) or of other food products, wherein
- a starter cut is provided at a front sausage end, in particular in the region of a tapering section (13) of the sausage at the end;
**characterized in that**
- the skin (15) is gripped in the region of the starter cut by means of two gripping members (17) at two points spaced apart from one another in the peripheral direction;
- the skin (15) is in particular pulled flat by a first working movement of the gripping members (17) into a plane extending parallel to the support surface (19) for the sausage;
- an incision is made into the skin (15), starting from the starter cut, in the region between the gripping members (17) and parallel to the longitudinal extent of the sausage;
- the skin (15) is raised, in particular away from the plane by a working movement, in particular by a second working movement, of the gripping members (17); and
- the sausage is conveyed parallel to its longitudinal extent and the skin (15) is pulled off the sausage.

2. A method in accordance with claim 1,
**characterized in that** the support surface (19) for the sausage is essentially disposed in a plane into which the skin is pulled flat by a first working movement of the gripping members (17).

3. A method in accordance with claim 1 or claim 2, **characterized in that** the skin (15) is pulled flat to the support surface (19) for the sausage by a first working movement of the gripping members (17).

4. A method in accordance with any one of the preceding claims, **characterized in that** the starter cut is provided by cutting off the sausage end, in particular substantially perpendicular to the longitudinal extent of the sausage (11).

5. A method in accordance with any one of the claims 1 to 3, **characterized in that** the starter cut is provided by spot-drilling the sausage end substantially parallel to the longitudinal extent of the sausage (11).

6. A method in accordance with any one of the preceding claims, **characterized in that** essentially no conveying movement of the sausage takes place relative to the gripping members (17) during a pulling flat of the skin (15) and during the incision into the skin (15) taking place in the region of the starter cut.

7. A method in accordance with any one of the preceding claims, **characterized in that**, on the raising of the skin (15), the skin ends gripped by the gripping members (17) are simultaneously moved from a plane, in particular a support surface (19) into which the skin (15) is pulled flat by a first working movement of the gripping members (17) and are moved away from one another.

8. A method in accordance with any one of the preceding claims, **characterized in that** the working movement of the gripping members (17) serving for the raising of the skin (15) is carried out as a stroke movement simultaneous with a movement apart, with the stroke movement substantially taking place in the same sense in a linear fashion and the movement apart taking place in opposite senses along a curved path.

9. A method in accordance with any one of the preceding claims, **characterized in that** the conveying movement of the sausage (11), in particular relative to the gripping members (17), starts during the raising of the skin (15).

10. A method in accordance with any one of the preceding claims, **characterized in that** a further incision is made into the skin (15) up to the rear product end during the conveying movement of the sausage (11), in particular relative to the gripping members (17), while continuing the incision which took place at the starter cut.

11. A method in accordance with any one of the preceding claims, **characterized in that** the skin (15) is brought between a first element (41), in particular of roller form, and a second element (43), in particular of roller form, by the working movement of the gripping members (17), with the first element (41) and the second element (43) engaging the skin (15) and in particular transporting it away through a gap, in particular a roller gap, formed by the elements.

12. A method in accordance with claim 11,
**characterized in that** the gripping members (17) release the skin (15) after the engaging of the skin (15) by the first element (41) and the second element (43).

13. A method in accordance with any one of the preceding claims, **characterized in that** the two points which are spaced apart in the peripheral direction and at which the skin (15) is gripped by the gripping members (17) are disposed beneath a horizontally aligned central plane (22) in which the central axis of the sausage (11) extends.

14. An apparatus for the skinning of sausages (11) or of other food products, in particular for the carrying out of a method in accordance with any one of the preceding claims, comprising
- an apparatus for the provision of a starter cut at the front product end;
- two gripping members (17);
- a cutting apparatus (21) which is designed to make an incision into the skin (15), starting from the starter cut, in the region between the gripping members (17) and parallel to the longitudinal extent of the sausage (11); and
- a conveying device which is designed to convey the sausage (11) parallel to its longitudinal extent
**characterized in that**
the two gripping members (17) are designed to grip the skin (15) initially in the region of the starter cut at two points spaced apart from one another in the peripheral region, in particular to then pull it flat into a plane extending parallel to the support surface (19) for the sausage, in particular to the support surface (19) for the sausage and subsequently to raise it, and
- **in that** the cutting apparatus (21) is designed to incise the skin (15) in the region between the gripping apparatus (17) starting from the starter cut in in a direction parallel to the longitudinal extent of the sausage (11).

## Revendications

1. Procédé pour peler des saucisses (11) ou autres produits alimentaires, dans lequel
- à une extrémité antérieure de la saucisse, en particulier dans la région d'un rétrécissement terminal (13) de la saucisse, on réalise une entame, **caractérisé en ce que**
- la peau (15) est saisie au moyen de deux organes de saisie (17) dans la région de l'entame à deux emplacements écartés l'un de l'autre en direction périphérique,
- la peau (15) est en particulier tirée, par un premier mouvement de travail des organes de saisie (17), à plat dans un plan parallèle à la surface de repos (19) de la saucisse,
- la peau (15) est entaillée parallèlement à l'extension longitudinale de la saucisse en partant de l'entame dans la région entre les organes de saisie (17),
- la peau (15) est soulevée, en particulier en s'éloignant du plan, par un mouvement de travail, en particulier un second mouvement de travail, des organes de saisie (17), et
- la saucisse est transportée parallèlement à son extension longitudinale et la peau (15) est alors enlevée de la saucisse.

2. Procédé selon la revendication 1,
**caractérisé en ce que** la surface de repos (19) de la saucisse est située essentiellement dans un plan dans lequel la peau est tirée à plat par un premier mouvement de travail des organes de saisie (17).

3. Procédé selon la revendication 1 ou 2,
**caractérisé en ce que** la peau (15) est tirée à plat sur la surface de repos (19) de la saucisse par un premier mouvement de travail des organes de saisie (17).

4. Procédé selon l'une des revendications précédentes,
**caractérisé en ce que** l'entame et réalisée par découpe de l'extrémité de la saucisse, en particulier essentiellement perpendiculairement à l'extension longitudinale de la saucisse (11).

5. Procédé selon l'une des revendications 1 à 3,
**caractérisé en ce que** l'entame est réalisée en perçant l'extrémité de la saucisse essentiellement parallèlement à l'extension longitudinale de la saucisse (11).

6. Procédé selon l'une des revendications précédentes,
**caractérisé en ce que**, pendant que l'on tire à plat la peau (15) et pendant que l'on entaille la peau (15) dans la région de l'entame, il ne se produit essentiellement aucun mouvement de transport de la saucisse par rapport aux organes de saisie (17).

7. Procédé selon l'une des revendications précédentes,
**caractérisé en ce que** lorsqu'on soulève la peau (15), les extrémités de la peau qui sont saisies par les organes de saisie (17) sont déplacées simultanément depuis un plan, en particulier depuis la surface de repos (19) dans laquelle la peau (15) est tirée à plat par un premier mouvement de travail des organes de saisie (17), et sont déplacées en éloignement l'une de l'autre.

8. Procédé selon l'une des revendications précédentes,
**caractérisé en ce que** le mouvement de travail des organes de saisie (17) qui sert à soulever la peau (15) est exécuté sous forme d'une superposition d'un mouvement de soulèvement et d'un mouvement d'écartement, tels que le mouvement de soulèvement a lieu essentiellement dans le même sens et de façon linéaire, et le mouvement d'écartement a lieu en sens opposé le long d'une trajectoire incurvée.

9. Procédé selon l'une des revendications précédentes,
**caractérisé en ce que** le mouvement de transport de la saucisse (11), en particulier par rapport aux organes de saisie (17), commence pendant le soulèvement de la peau (15).

10. Procédé selon l'une des revendications précédentes,
**caractérisé en ce que** la peau continue à être entaillée pendant le mouvement de transport de la saucisse (11), en particulier par rapport aux organes de saisie (17), en poursuivant l'entaille exécutée au niveau de l'entame jusqu'à l'extrémité arrière du produit.

11. Procédé selon l'une des revendications précédentes,
**caractérisé en ce que** la peau (15) est amenée, pendant le mouvement de travail des organes de saisie (17) entre un premier élément (41), en particulier en forme de cylindre, et un second élément (43), en particulier en forme de cylindre, dans lequel le premier élément (41) et le second élément (43) prennent la peau (15) et la transportent en éloignement, en particulier en traversant un intervalle formé par les éléments, en particulier un intervalle entre les cylindres.

12. Procédé selon la revendication 11,
**caractérisé en ce que** les organes de saisie (17) lâchent la peau (15) après que la peau (15) ait été prise par le premier élément (41) et le second élément (43).

13. Procédé selon l'une des revendications précédentes,
**caractérisé en ce que** les deux emplacements écartés l'un de l'autre en direction périphérique, auxquels la peau (15) est saisie au moyen des organes de saisie (19), sont situés au-dessous d'un plan médian (22) orienté horizontalement, dans lequel s'étend l'axe de médian de la saucisse (11).

14. Appareil pour peler des saucisses (11) ou d'autres produits alimentaires, en particulier pour mettre en oeuvre un procédé selon l'une des revendications précédentes, comprenant
- un dispositif pour réaliser une entame à l'extrémité antérieure du produit,
- deux organes de saisie (17),
- un dispositif de coupe (21) qui est réalisé pour entailler la peau (15) parallèlement à l'extension longitudinale de la saucisse (11) dans une région entre les organes de saisie (17), et
- un dispositif de transport qui est réalisé pour transporter la saucisse (11) parallèlement à son extension longitudinale,
**caractérisé en ce que**
- les deux organes de saisie (17) sont réalisés tout d'abord pour saisir la peau (15) dans la région de l'entame à deux emplacements écartés l'un de l'autre en direction périphérique, et en particulier pour la tirer alors à plat dans un plan parallèle à la surface de repos (19) de la saucisse, en particulier sur la surface de repos (19) de la saucisse, et ensuite pour la soulever, et
- le dispositif de coupe (21) est réalisé pour entailler la peau (15) parallèlement à l'extension longitudinale de la saucisse (11) en partant de l'entame dans la région entre les organes de saisie (17).
